# EUROPEAN PATENT SPECIFICATION

(11) **EP 3 108 742 B1**
(45) Date of publication and mention of the grant of the patent: **22.05.2019**
(21) Application number: 16175026.0
(22) Date of filing: 17.06.2016
(51) Int. Cl.: A01D 89/00, A01D 80/02

(54) **TINE MOUNTING PADS**
ZINKENMONTAGEPADS
COUSSINETS DE MONTAGE DE DENT

(30) Priority: 22.06.2015 US 201562182867 P
(43) Date of publication of application: 28.12.2016
(73) Proprietor: Vermeer Manufacturing Company, Pella, IA 50219 (US)
(72) Inventor: DUENWALD, Tom, Pella, IA 50219 (US); KNEE, Alex, Urbandale, IA 50322 (US); DUNHAM, Lisle J., Grinnell, IA 50112 (US)
(74) Representative: Worthington, Richard Easton

(56) References cited:
- CH-A- 382 485
- US-A- 2 714 796
- US-A- 3 531 927
- US-A1- 2011 225 942
- US-A1- 2013 327 009

## Description

### FIELD OF THE DISCLOSURE

The present invention refers to mounting pads for attaching tines to a pick-up device of an agricultural vehicle or implement such as a round baler.

### BACKGROUND

Crop and forage vehicles and implements have become an integral part of the agricultural industry and a variety of different types of agricultural vehicles or implements such as crop harvesters (e.g., round balers, big or small square balers, peanut harvesters and pea harvesters) and windrow mergers are currently in use. Such crop vehicles may process any of the various agricultural crop products that have been cut and are to be retrieved from the ground or otherwise processed, such as, but not limited to, hay, straw, and corn stover.

Such harvesting vehicles use a pick-up device to lift the crop material from the surface over which the vehicle travels and into the implement. The pick-up device typically includes a number of crop-engaging tines attached to a shaft or tine bar. The pick-up device rotates to allow the tines to grasp crop material and to lift it from the ground. The material is conveyed into the vehicle.

Every crop-engaging tine comprises at least one coil mounted on a shaft or tine bar and at least one arm mounted at the coil. During use, the crop-engaging tines contact periodically, e.g. one time per pick-up device rotation, the ground. The contacted ground and crop material together cause a given crop-engaging tine to deflect from its resting position. The tine coil absorbs such forces and allows the tine arm to return to its resting position after deflection. Over time, the repeated stress may cause the tine to wear and even fail which results in less reliable crop pick-up and which may require the operator to stop operation of the vehicle for replacement of the tine.

A need exists for crop harvester or implement pick-up devices with improved durability and which are capable of absorbing large stresses caused by deflection over uneven terrain (e.g., uneven or rocky ground).

US 2013/0327009 describes a tine mounting bracket for connecting tines to tine bars on an agricultural pick-up reel. The tines include a coiled spring section at the base of the tine and adjacent to the tine bar connection. The improved mounting bracket includes a flange that extends in adjacent contact with a portion of the coiled spring section and inhibits lateral deflection of the tine spring.

This section is intended to introduce the reader to various aspects of art that may be related to various aspects of the invention, which are described and/or claimed below. This discussion is believed to be helpful in providing the reader with background information to facilitate a better understanding of the various
aspects of the present disclosure. Accordingly, it should be understood that these statements are to be read in this light, and not as admissions of prior art.

### SUMMARY

One aspect of the present disclosure is directed to a mounting pad for fastening a crop-engaging tine to a tine support of a crop-engaging device of an agricultural harvester or implement. The mounting pad includes a body portion for mounting between the tine and the tine support. The body portion has a body aperture for receiving a given fastener to attach the body portion to the tine support. The mounting pad is characterised by a tab that extends from the body portion for mounting between a given fastener and the tine. The tab has a tab aperture for receiving the given fastener.

A further aspect of the present disclosure is directed to a tine assembly for engaging crop material lying on the ground. The tine assembly belongs to or can be attached to an agricultural vehicle or implement. The tine assembly includes a crop-engaging tine having a connecting loop, at least one coil and at least one arm that extends from the or one coil. The connecting loop extends from the or every coil for attaching the tine to a tine support. The tine assembly includes the mounting pad of the above aspect of the present disclosure.

The mounting pad establishes a distance and therefore avoids a mechanical contact between the crop-engaging tine and the tine support. Therefore the surface of the tine does not glide over the surface of
the tine support, in particular when the tine touches the ground and is rotated with respect to the tine support. An undesired contact between the or one coil and the tine support is avoided, in particular if the tine is pivoted with respect to the tine support, e.g. due to a ground contact. In particular the or every coil remains in a distance to the tine support. The lifetime of the tine assembly and that of the crop-engaging device are prolonged. The risk of a fracture is significantly reduced. Thanks to the mounting pad the tine can nevertheless securely be mounted at the tine support.

It is also possible that two different fasteners are guided through two apertures. This provides the flexibility to selectively one common fastener or two different fastener.

Thanks to the common fastener or to both fasteners the mounting pad is better connected with the tine support as two pad parts are attached to it. It is possible that the body portion contacts the connecting loop from one side and the tab contacts the same connecting loop from at least one further side. The loop is surrounded from at least two sides by the mounting pad which is attached to the tines support by the fastener. Thereby the fastener and the mounting pad together contribute to mount the tine at the tine support and prevent an undesired movement or even a loss of the tine. The fastener provides a point connection which is less subjected to stress than a connection along a line.

It is possible to mount the mounting pad releasable at the tine support. Therefore the or one mounting pad can be replaced with a new one. The existing tine support and the or every existing crop-engaging tine can further be used wherein the new mounting pad is arranged between them. This feature reduces maintenance costs - compared a solution which requires that the entire tine or even the entire tine assembly is to be exchanged.

Often a ground-engaging tine comprises at least one coil and a connecting loop connected to the or every coil. The loop is attached to the tine support. Preferably the mounting pad surrounds a part of the surface of the connecting loop. An undesired contact between the tine and the tine support is avoided - even if the tine is pivoted with respect the tine support, e.g. due to a ground contact. This embodiment even better protects the tine.

Often the tine support comprises at least one L-shaped tine bar which is formed by a tine bar base and a tine bar sidewall. Preferably the mounting pad comprises a main body and at least one arcuate leg. The main body is mounted between the tine and the tine bar base. The or at least one arcuate leg is mounted between the tine and the tine bar sidewall. In this embodiment the mounting pad even better provides an undesired contact between the or any coil or a further part of the tine and the L-shaped tine bar.

In one embodiment the crop-engaging tine comprises two coils and a loop connecting the coils. The two coils can carry two tine arms. Accordingly the mounting pad comprises two arcuate legs. Every leg is positioned between one coil and the tine support. The embodiment with two tine arms improves the crop-engaging performance. The mounting pad surrounds a larger part of the tine surface. Therefore two mounting pad legs improve the protecting functionality of the mounting pad.

Preferably the crop-engaging tine is made of a first material, e.g. metal, and the mounting pad is made of a second material different from the first material, e.g. from rubber or a polymer or a self-lubricating material. Thanks to the invention the material for the tine can be selected according to constraints for engaging and processing crop material on the ground. The second material for the mounting pad can be selected according to differing constraints, namely to avoid the undesired contact between the tine and the tine bar and to enable the tine to pivot with respect to the tine support.

Preferably the mounting pad is made of an elastic material. The pivotal movement of the crop-engaging tine with respect to the tine support temporally deforms the mounting pad but does not cause rear or stress to the tine.

In one embodiment the tab is rigidly to the body portion. In an alternative embodiment the tab is hingedly connected to the body portion. The rigid connection provides an even higher stability and longer lifetime of the mounting pad. The embodiment with the hinged connection enables the hingedly mounted tab to better loop around a part of the connecting loop. A larger part of the tine surface is surrounded by the mounting pad. The mounting pad can even better be adapted to the geometry in construction of the tine. In some cases it is easier to mount the mounting pad at the proper place.

In one application the tine assembly according to the invention is used for lifting and thereby picking-up loose crop material from the ground. The vehicle serves an agricultural harvester and conveys the picked-up crop material on board of the harvester, e.g. injects it into a feeding channel which guides into a processing or storing chamber, e.g. into a pressing or freshening or loading chamber. In a further application the tine assembly is used for engaging and moving material over the ground without picking it up, e.g. for creating swathes or raking crop material on the ground or cleaning the ground.

The invention can be used on board of a vehicle which is self-propelled or is pulled by a propelled vehicle. The invention can also be used on board of an agricultural implement which is mounted to a tractor and supported by the tractor.

Various refinements exist of the features noted in relation to the above-mentioned aspects of the present disclosure. Further features may also be incorporated in the above-mentioned aspects of the present disclosure as well. These refinements and additional features may exist individually or in any combination. For instance, various features discussed below in relation to any of the illustrated embodiments of the present disclosure may be incorporated into any of the above-described aspects of the present disclosure, alone or in any combination.

### BRIEF DESCRIPTION OF THE DRAWINGS

Figure 1 is a perspective view of a crop harvester shown as a pulled round baler;
Figure 2 is a perspective cross-section view of the round baler of Fig. 1;
Figure 3 is a perspective view of a pick-up device of the round baler baler of Fig. 1;
Figure 4 is a detailed perspective view showing two tine assemblies and a tine bar of the pick-up device of Fig. 3;
Figure 5 is a perspective view of the tine assembly of Fig. 4;
Figure 6 is a partial perspective view of the pick-up tine belonging to the tine assembly of Fig. 5;
Figure 7 is a rear view of the pick-up tine of Fig. 6;
Figure 8 is a perspective view of a mounting pad of the tine assembly of Fig. 5;
Figure 9 is a perspective cross-section view of the tine assembly of Fig. 5 including a fastener;
Figure 10 is a side view of the mounting pad of Fig. 8; and
Figure 11 is another embodiment of a mounting pad.

Corresponding reference characters indicate corresponding parts throughout the figures.

### DETAILED DESCRIPTION

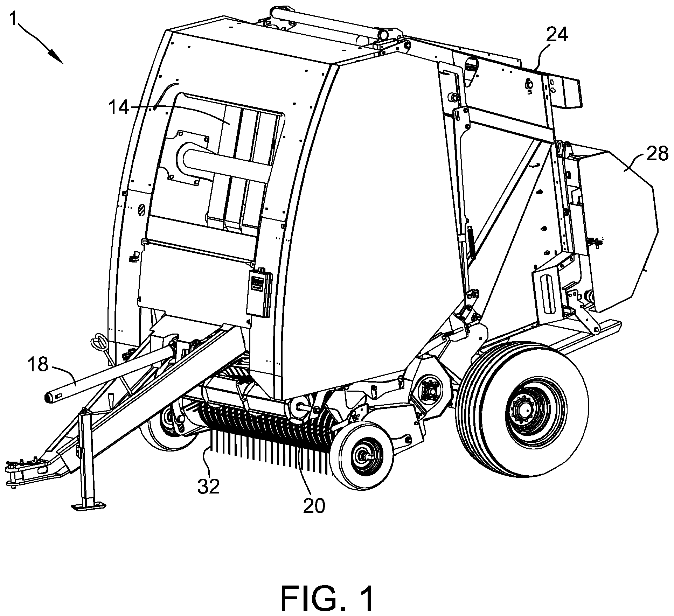

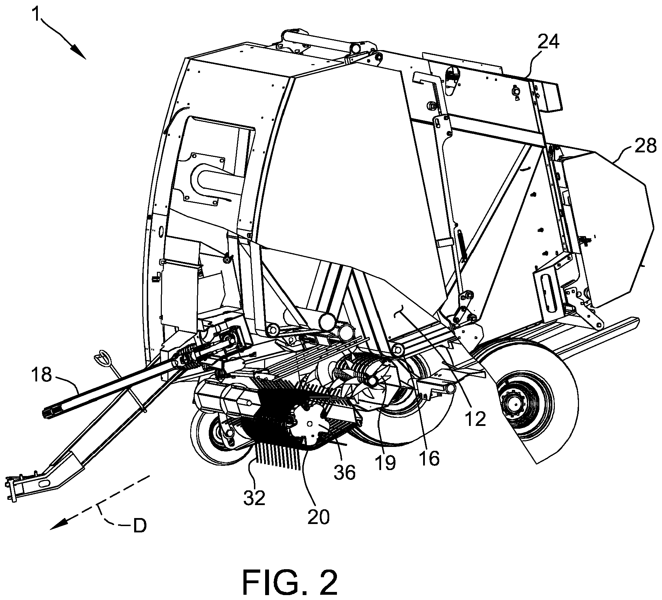

Referring now to Figures 1 and 2, an agricultural vehicle 1 for forming round-cylindrical bales from crop material is shown. The vehicle 1 is generally shown and described herein as a round baler. The invention can be used for any vehicle or implement 1 that includes a pick-up device or further crop-engaging device 20 having crop-engaging tines 32 such as square balers, combine harvesters, field choppers loader wagons or other crop harvesters, rakes, swathers, tedders, windrow mergers and the like.

The round baler 1 includes an expandable baling chamber 12 which operates by utilizing a series of side-by-side bale forming belts 14 routed around a series of rollers 16. Alternatively, a single bale forming belt routed around the rollers may be utilized. Additionally, the baler 1 includes a towing unit 13, a main input shaft 18 driven by the PTO shaft of a pulling tractor (not shown), a single or a plurality of belt tighteners (not shown) and a discharge gate (tailgate) 24 which can be pivoted between a closed position (Fig. 1, Fig. 2) and an opened position.

Material is picked up by the pick-up device 20 and transferred to a conveying rotor assembly 19 (Fig. 2) that moves the picked-up crop material through a feeding channel toward the baling chamber 12. As crop material is injected into the baling chamber 12, the material is compressed by the plurality of bale forming belts 14. Tension is maintained in the bale forming belts 14 by the series of belt tighteners to ensure a properly compressed bale.

Once a completed bale (not shown) is formed, pickup of further crop material is temporally ceased. Or the further crop material is temporally injected into a buffering chamber. A wrapping sequence is commenced by a wrapping device 28 which comprises an unrolling station for a supply reel with wrapping material. The wrapping device 28 is configured to apply a required number of layers of wrap material, to the circumferential surface of the completed round-cylindrical bale while the discharge gate is still closed. Once the wrapping sequence is completed, the operator lets the completed bale be ejected from the baling chamber 12 by triggering an actuator (not shown) for opening the discharge gate 24.

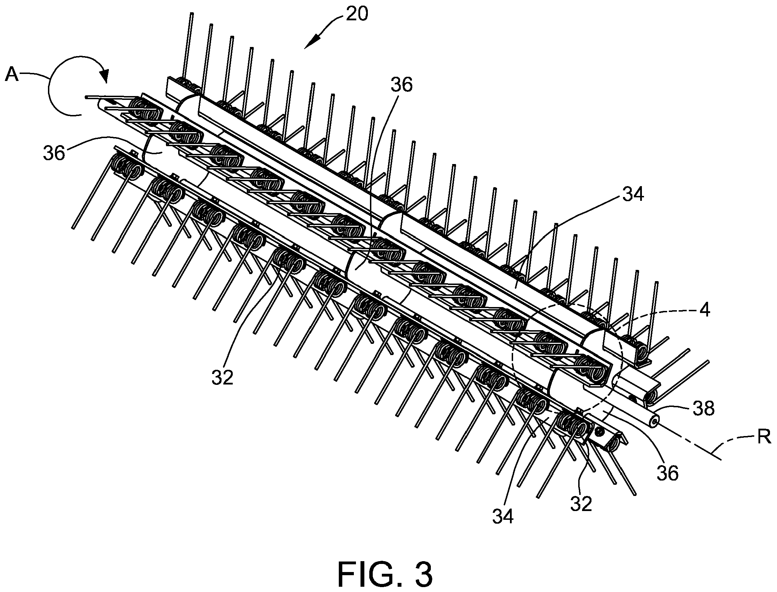

The embodiment of the invention refers to the pick-up device 20. The pick-up device 20 (Fig. 3) serves at a crop-engaging device and includes a number of pick-up tines 32 serving as crop-engaging tines. The tines 32 lift crop material from the surface over which the baler 1 travels and transfer it into the feeding channel which guides into the baling chamber 12. As the tines 32 rotate about the axis of rotation R of the pick-up device 20 in the direction indicated by the arrow A, the tines 32 pick-up crop material and direct it toward the feeding channel and thereby towards the baling chamber 12 (Fig. 2, Fig. 3). The pick-up device 20 may include several rows of tines 32 as shown in Figure 3. The tines may perform cyclic movements around the axis R. Or the tines 32 may be aligned in a staggered or "cammed" arrangement.

The pick-up device 20 includes a tine support comprising three supporting disks 36 and a number of parallel L-shaped tine bars 34 to which the tines 32 are attached. Each tine bar 34 is attached to all three parallel supporting disks 36. A shaft 38 is attached to one or more supporting disks 36 for rotation of the pick-up device 20. The shaft 38 may be driven by a chain or by an electric motor (not shown), e.g. Other arrangements of the pick-up device 20 may be used in other embodiments (e.g., more or less disks 36, more or less tine bars 34, use of a shaft 38 that extends over the whole width, cammed tine arrangement, a closed pick-up drum, etc.). In the embodiment the tine bars 34, the supporting disks 36, and the tines 32 are made of metal.

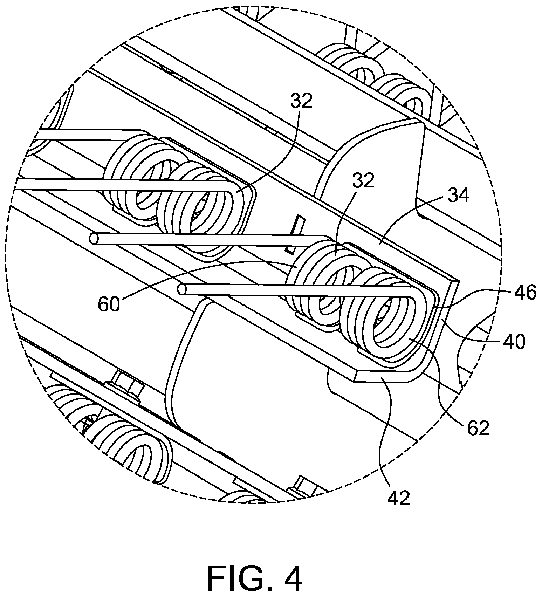

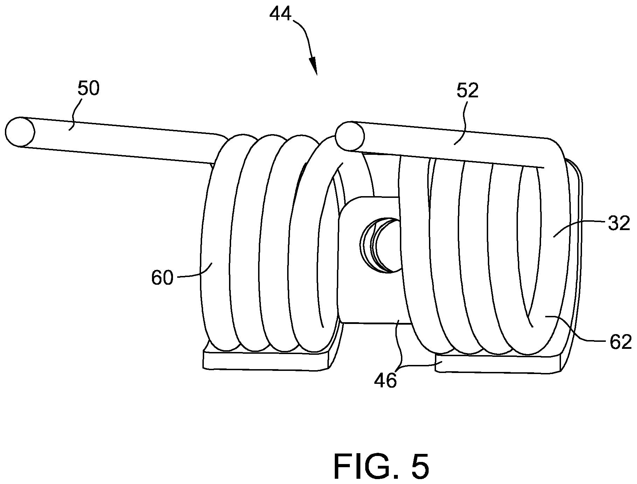

Referring now to Figure 4, every tine bar 34 includes a base 40 that is attached to all supporting disks 36 (Fig. 3) and a sidewall 42 perpendicular to the base 40 both extending nearly of the entire width of the pick-up device 20. Therefore the tine bar 34 has an L-shaped cross section (Fig. 4). Every pick-up tine 32 comprises two parallel crop-engaging arms 50, 52, two coils 60, 62, and a loop 66 connecting the two coils 60, 62 with each other, cf. Fig. 4 and Fig. 5. Every arm 50, 52 is mounted at one coil 60, 62.

A respective mounting pad 46 is attached to every pick-up tine 32. The mounting pad 46 is disposed between the tine 32 and the tine bar 34. The mounting pad 46 enables the tine 32 to be mounted at the tine bar 34 but prevents the tine 32 from contacting the tine bar 34 by establishing a distance. The mounting pad 46 prevents the pick-up tine 32 from contacting the base 40 as well as from contacting the sidewall 42 of the tine bar 34 as shown in Fig. 4. A metal-to-metal contact between the pick-up tine 32 and the tine bar 34 is therefore avoided.

The pick-up tine 32 and the mounting pad 46 together form a tine assembly 44 (Fig. 5). A respective sequence of such tine assemblies 44 is mounted to every tine bar 34.

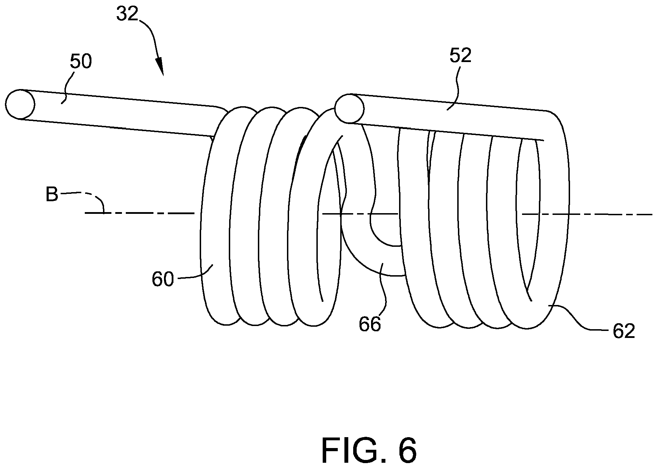

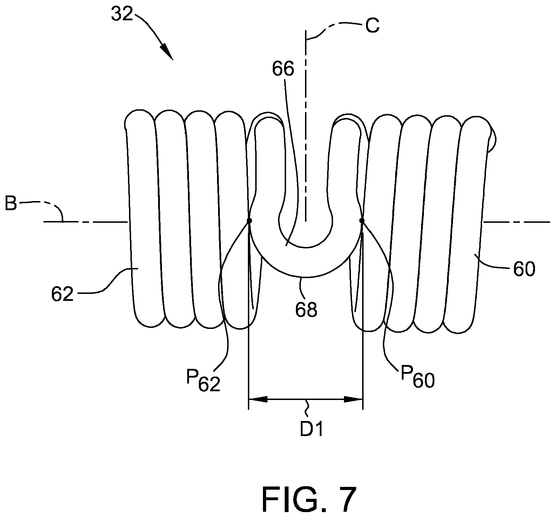

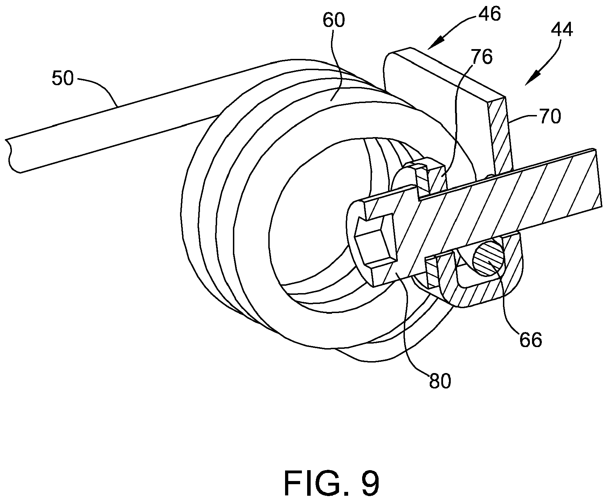

The tine assembly 44 may also include a common fastener 80 (Fig. 9) that extends through the mounting pad 46 and a corresponding connecting loop 66 of the tine 32. Each tine 32 includes a first crop-engaging arm 50 (Fig. 6) that extends from a first spring coil (or simply "coil") 60 and a second crop-engaging arm 52 that extends from a second coil 62. The first and second coils 60, 62 have a common central axis B. The tine 32 also has a cross-wise axis C (Fig. 7) perpendicular to the central axis B and perpendicular to the tine arms 50, 52.

The coils 60, 62 are joined by a connecting loop 66 that extends parallel to the central axis B, i.e. connects the coils 60, 62 laterally along the axis B. An U-shaped part 68 of the connecting loop 66 begins when the winded cord of the coils 60, 62 moves beyond about a 45° angle with the cross-wise axis C (e.g., about points P₆₀, P₆₂ in Figure 7). The connecting loop 66 therefore comprises the U-shaped part 68 and has a width D1 (Fig. 7) measured from the edges of the connecting loop 66 nearest the coils 60, 62. As shown in Figure 7, this distance D1 corresponds to the distance between the first coil 60 and the second coil 62. This distance D1 is smaller than the distance between the two tine arms 50, 52 (Fig. 6). The U-shaped part 68 of the connecting loop 66 serves as a free end opposite where the loop 66 begins. The points P₆₀ and P₆₂ delimit the curved section of the U-shaped part 68.

While the tines 32 are described and shown having two coils 60, 62 and two arms 50, 52, a crop-engaging pick-up tine having a single coil and a single tine arm may also be used without departing from the scope of the present disclosure. Such single coil tines include a mounting surface (e.g., connecting loop) to attach the tine to its tine support in the implement.

During use, the tine arms 50, 52 contact the crop material and lift the crop material upward into the harvester 1. The tine arms 50, 52 contact and engage crop material. In general they periodically engage the surface over which the harvester 1 travels and may hit a rigid object on the ground. Contact with the crop material and the surface causes the tine arms 50, 52 to deflect. Deflection is elastically resisted by the coils 60, 62, which act to return the tine arms 50, 52 to their relaxed position after the ground contact is finished.

Generally, the tines 32, the tine bar 34 (Fig. 4) and the fastener 80 (Fig. 9) are made of a metal (e.g., a single metal or a metal alloy like steel). In place of tines entirely made of metal the tine can also comprise at least one part made of a further material, e.g. of rigid plastic.

Preferably the mounting pad 46 is made of an elastic material. The mounting pad 46 may be composed of a material different than the material of the tines 32, e.g. a polymer and/or an elastic material. During operation every mounting pad 46 prevents the assigned pick-up tine 32 from directly contacting the tine bar 34. The mounting pads 46 may be composed of a material with a higher lubricity/lower coefficient of friction, a higher elasticity, and/or a higher wear factor (which may be a product of higher hardness, greater toughness, etc., or a combination of such factors) relative to the tines 32 and/or tine bar 34. Every mounting pad 46 may be composed of a polymer (e.g., ABS, nylon, nylon with embedded molybdenum disulfide, polyurethane) or a self-lubricated material (self-lubricated polytetrafluoroethylene (PTFE) or self-lubricated ceramics).

In one implementation all mounting pads 46 are made of the same material. It is also possible that the mounting pads 46 in a center segment of the pick-up device 20 are made of a first pad material and the mounting pads 46 in the lateral pick-up segments are made of a second pad material different from the first pad material, e.g. from a more robust material.

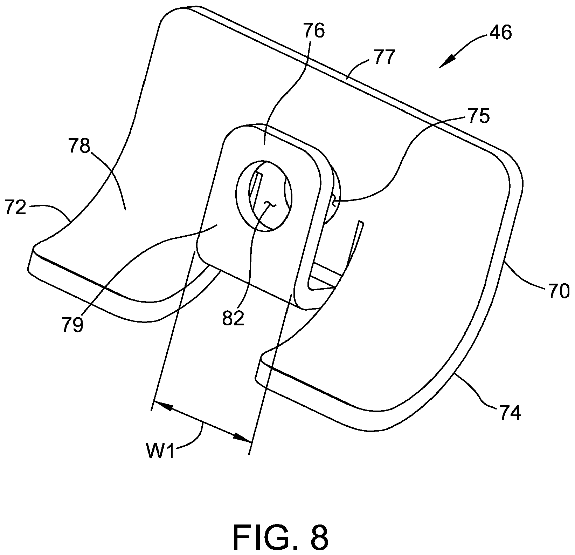

The mounting pad 46 includes a body portion or "main body" 70 (Fig. 8). The body portion 70 includes a first actuate leg 72 for mounting between the first coil 60 (Fig. 4) and the tine bar 34 and a second actuate leg 74 (Fig. 8) for mounting between the second coil 62 (Fig. 4) and the same tine bar 34. The body portion 70 also includes a body aperture 75 for receiving a fastener 80 (Fig. 9) to attach the body portion 70 to the tine bar 34 (Fig. 4). The body aperture 75 is positioned between the arcuate legs 70 and 72. It is not necessarily circular and, for example, may extend upward to the top edge 77 of the mounting pad 46 (e.g., the aperture may be in the form of a U-shaped slit in the mounting pad 46).

The mounting pad 46 also includes a tab 76 that extends from the main body (body portion 70) for mounting between a fastener 80 (Fig. 9) and the connecting loop 66. The tab 76 includes a tab aperture 82 (Fig. 8) for receiving the fastener 80 (Fig. 9). The tab 76 has a width W1 that is about equal to or less than the distance D1 (Fig. 7) separating the coils 60 and 62. As the distance W1 is equal to or smaller than the distance D1, the tap 76 can be looped around the part 68 of the connecting loop 66. The tab 76 and the main body 70 have opposing inner surfaces 78 for contacting the tine 32. The main body 70 has an outer surface (not shown) for contacting the tine bar 34. The tab 76 has an outer surface 79 for contacting the fastener 80 (Fig. 9).

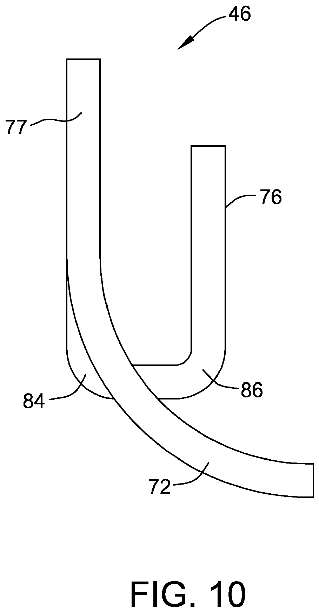

The tab 76 may rigidly be mounted at or hinged to the main body 70. A hinged connection facilitates looping of the tab 76 around the free end 68 (Fig. 7) of the connecting loop 66. As shown in Figure 10, the mounting pad 46 includes a first hinge 84 and a second hinge 86 which give the tab 76 its U-shape. In some embodiments, the hinges 84, 86 are "living hinges" in which the tab 76 is partially cut so that the pieces are able to bend along the hinge. Fig. 10 further shows one arcuate leg 72 of the mounting pad 46.

In the illustrated embodiment, the body aperture 75 and the tab aperture 82 are aligned (or are capable of being aligned by hinges 84, 86) such that a common fastener 80 is used to attach the mounting pad 46 to the tine bar 34 (Fig. 4). The fastener 80 further contributes to mount the pick-up tine 32 at the tine bar 34. In other embodiments, the apertures 75, 82 are not aligned and two or more fasteners are used to secure the mounting pad 46 and/or the pick-up tine 32 to the tine bar 34.

The fastener 80 may be a flanged bolt, i.e. is one piece, or may include a bolt and various separate washers to distribute the closing force of the bolt. The tab 76 is disposed between the flange or washers and the tine bar 34 (Fig. 4).

While the mounting pad 46 is shown as including a body portion 70 and a tab 76, in other embodiments a mounting pad assembly (not shown) is provided in which the body portion 70 and the tab 76 are separate pieces.

The mounting pad 46 may have a thickness sufficient to prevent the pad 46 from being worn through and that provides sufficient structure to manipulate the mounting pad 46 to fasten it to the tine bar 34. For example, the mounting pad 46 may have a thickness of at least about 0.8 mm (1/32 inch), at least about 1.6mm (1/16 inch) or at least about 3.2mm (1/8 inch).

Generally, the tine 32 does not contact the tine bar 34 (Fig. 4) as the mounting pad 46 is disposed on all surfaces of the tine 32 which may come in contact with the tine bar 34. In addition, the tine 32 does not contact the fastener 80 (Fig. 9) as the tab 76 of the mounting pad 46 is between the tine 32 and fastener 80.

In this regard, it should be noted that the mounting pad 46 (e.g., the body portion 70) may have a variety of shapes and geometries.

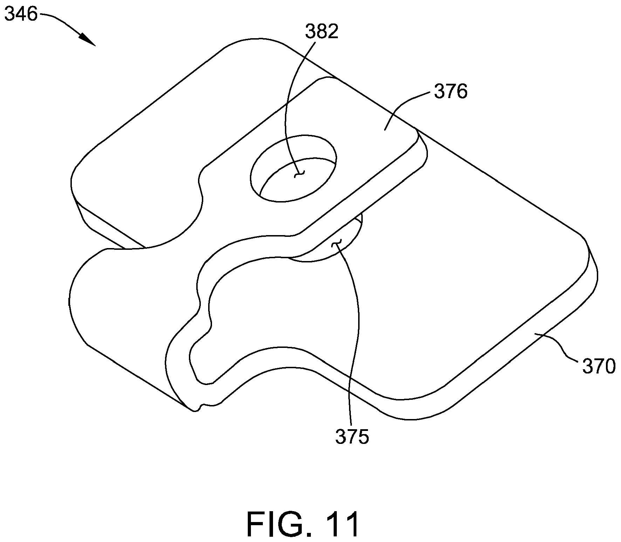

Another embodiment of the mounting pad generally referenced as "346" is shown in Figure 11. The mounting pad 346 includes a main body portion 370 having a body aperture 375. A tab 376 extends from the main body 370 and includes a tab aperture 382. Rather than having separate legs 72, 74 as with the mounting pad 46 of Figure 8, the body portion 370 of the mounting pad 346 of Figure 11 is a single piece that is disposed between both tine coils 60, 62 (Fig. 7) and the tine bar 34 (Fig. 4). In other embodiments, the body portion 370 is arcuate to better match the shape of the tine coils 60, 62.

Compared to conventional tine mounting assemblies, the tine assembly 44 (Fig. 5) of the present invention has several advantages. By using mounting pads 46 between the or every tine bar 34 and the tines 32 mounted at this tine bar 34, the tines 32 do not contact the tine bar 34. During operation the mounting pads 46 permanently establish a distance such that a metal-to-metal contact between the pick-up tine 32 and the tine bar 34 is avoided. This feature prevents and/or greatly reduces wear of the tines 32 and formation of stress risers which cause the tine to fracture.

By using a mounting pad 46 with arcuate legs 72, 74, the mounting pad 46 may prevent the coils 60, 62 from contacting the base 40 or the sidewall 42 or both of the tine bar 34. The mounting pad tab 76 allows the tine 32 to be secured by a fastener 80 (Fig. 9) without the fastener contacting the tine 32. A contact between fastener and tine may wear the tine and produce stress risers at the contact point. The mounting pad 46 may also act as a damping agent to decrease the spring energy and shock loads the tine coils 60, 62 experience during pull-back and extension. The mounting pad 46 may also greatly reduce the amount of fretting corrosion caused by the coils rubbing directly on the tine support 34.

As used herein, the terms "about," "substantially," "essentially" and "approximately" when used in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

When introducing elements of the present description of the invention or the embodiment(s) thereof, the articles "a", "an", "the" and "said" are intended to mean that there are one or more of the elements. The terms "comprising," "including," "containing" and "having" are intended to be inclusive and mean that there may be additional elements other than the listed elements. The use of terms indicating a particular orientation (e.g., "top", "bottom", "side", etc.) is for convenience of description and does not require any particular orientation of the item described.

As various changes could be made in the above constructions and methods without departing from the scope of the disclosure, it is intended that all matter contained in the above description and shown in the accompanying drawing[s] shall be interpreted as illustrative and not in a limiting sense.

**LIST OF REFERENCE SIGNS**

| | |
|---|---|
| 1 | round baler |
| 12 | expandable drum-shaped baling chamber of the baler 1 |
| 13 | towing unit of the baler 1 |
| 14 | pressing belts arranged side-by-side and surrounding the chamber 12 |
| 16 | guiding rollers for deflecting the pressing belts 14 |
| 18 | main input shaft of the baler 1 |
| 19 | conveying rotor assembly with several conveying stars, conveys pick-up crop material towards the baling chamber 12 |
| 20 | pick-up device, comprises several pick-up tines 32 and several tine bars 34 mounted at three supporting discs 36 |
| 24 | pivotal discharge gate (tailgate) |
| 28 | wrapping device, comprises an unrolling station for a supply reel |
| 32 | pick-up tine, comprises two coils 60, 62, a connecting loop 66 between the coils 60, 62, and two arms 50, 52 |
| 34 | L-shaped tine bar, carries a sequence of pick-up tines 32 |
| 36 | supporting discs for the tine bars 34 |
| 38 | shaft which rotates the pick-up device 20 in the direction A around the axis R |
| 40 | base of the tine bar 34, attached to a supporting disc 36 |
| 42 | sidewall of the tine bar 34, rigidly mounted at the base 40 |
| 44 | tine assembly comprising a pick-up tine 32, a mounting pad 46, and optionally a fastener 80 |
| 46 | mounting pad, comprises a body portion 70, a tab 76 and two arcuate legs 72, 74 |
| 50, 52 | arms of the pick-up tine 32, mounted at the coils 60, 62 |
| 60, 62 | coils of a pick-up tine 32, connected by the loop 66 |
| 66 | connecting loop, connects the coils 60, 62 of a pick-up tine 32, comprises the part 68 |
| 68 | U-shaped part of the connecting loop 66 |
| 70, 370 | main body (body portion) of the mounting pad 46, 346 comprises in one embodiment the arcuate legs 72, 74 |
| 72, 74 | arcuate legs of the mounting pad 46, contact the coils 70, 72 |
| 75, 375 | aperture in the main body 70 for receiving the fastener 80 |
| 76, 376 | tab of the mounting pad 46, 346, extends from the main body 70, 370 towards the fastener 80 |
| 77 | top edge of the mounting pad 46 |
| 78 | opposing inner surfaces of the tab 76 and of the main body 70, contact the tine 32 |
| 79 | outer surface of the tab 76, contacts the fastener 80 |
| 80 | common fastener, connects the tab 76 and the main body 70 of a mounting pad 46 with a tine bar 34 |
| 82, 382 | aperture in the tab 76, 376 for the fastener 80 |
| 84 | hinge for connecting the tab 76 with the main body 70 |
| 86 | hinge for connecting two parts of the tab 76 with each other |
| 346 | further mounting pad, comprises a body portion 370 and a tab 376 |
| A | direction in which the pick-up device 20 is rotated |
| B | common central axis of the coils 60, 62 |
| C | cross-wise axis C of the pick-up tine 32, perpendicular to the axis B and to the tine arms 50, 52 |
| D1 | width of the connecting loop 66 |
| P₆₀, P₆₂ | end points of the circular part 68 of the connecting loop 66 |
| R | horizontal rotating axis of the pick-up device 20 |
| W1 | width of the tab 76 |

## Claims

1. A mounting pad (46, 346) for fastening a crop-engaging tine (32) to a tine support (34, 36) of a crop-engaging device (20) of an agricultural harvester or implement (1), the mounting pad (46, 346) comprising:
a body portion (70, 370) for mounting between the tine (32) and the tine support (34, 36), the body portion (70, 370) having a body aperture (75, 375) for receiving a given fastener (80) to attach the body portion (70, 370) to the tine support (34, 36); and
**characterised by** a tab (76, 376) that extends from the body portion (70, 370) for mounting between a given fastener (80) and the tine (32), the tab (76, 376) having a tab aperture (82, 382) for receiving the given fastener (80).

2. The mounting pad (46, 346) as set forth in claim 1 wherein the body aperture (75, 375) and the tab aperture (82, 382) are capable of being aligned to receive a common fastener (80) to attach the mounting pad (46, 346) to the tine support (34, 36).

3. The mounting pad (46, 346) as set forth in claim 1 or 2 wherein the mounting pad (46, 346) is adapted to fasten a crop-engaging tine (32) having two coils (60, 62) connected by a connecting loop (66) and two arms (50, 52) to the tine support (34, 36), the mounting pad (46, 346) comprising:
a first arcuate leg (72) for mounting between a first coil (60) and the tine support (34, 36); and
a second arcuate leg (74) for mounting between a second coil (62) and the tine support (34, 36).

4. The mounting pad (46, 346) as set forth in claim 3 wherein the tab (76, 376) is hinged to the body portion (70, 370) to allow the tab (76, 376) to loop around a part (68) of the connecting loop (66) of the tine (32).

5. The mounting pad (46, 346) as set forth in any one of claims 1 to 4 wherein the mounting pad (46, 346) comprises at least one of a polymer and a self-lubricating material.

6. A tine assembly (44) for engaging crop material lying on the ground; the tine assembly (44) being arranged for being attached to an agricultural vehicle or implement (1), the tine assembly (44) comprising:
a crop-engaging tine (32) comprising:
at least one coil (60, 62)
at least one arm (50, 52) that extends from the or one coil (60, 62); and
a connecting loop (66) extending from the or every coil (60, 62) for attaching the tine (32) to a tine support (34, 36); and
the mounting pad (46, 346) as set forth in claim 1.

7. The tine assembly (44) as set forth in claim 6 wherein the tab (76, 376) is looped around the connecting loop (66) of the tine (32), the body aperture (75, 375) and the tab aperture (82, 382) of the mounting pad (46, 346) being aligned to allow a common fastener (80) to attach the mounting pad (46, 346) to the tine support (34, 36).

8. The tine assembly (44) as set forth in claim 7 further comprising a fastener (80) for attaching the mounting pad (46, 346) at the tine support (34, 36), the fastener (80) being received in the body aperture (75, 375) and in the tab aperture (82, 382).

9. The tine assembly (44) as set forth in any one of claims 6 to 8 wherein the tine (32) comprises a further coil (62), the connecting loop (66) of the tine (32) joining the coil (60) and the further coil (62), the mounting pad (46, 346) being adapted for mounting between the coil (60) and the further coil (62) on the one side and the tine support (34, 36) on the other side.

10. The tine assembly (44) as set forth in claim 9 wherein the mounting pad (46, 346) comprises:
a first arcuate leg (72) for mounting between the coil (60) and the tine support (34, 36); and
a second arcuate leg (74) for mounting between the further coil (62) and the tine support (34, 36).

11. The tine assembly (44) as set forth in claim 10 wherein the coil (60) and the further coil (62) are separated by a distance (D1), the tab (76, 376) having a width (W1) that is equal to or smaller than the distance (D1) between the coils (60, 62).

12. The tine assembly (44) as set forth in any one of claims 6 to 11 wherein the tab (76, 376) is hinged to the body portion (70, 370) of the mounting pad (46, 346) to allow the tab (76, 376) to loop around a part (68) of the connecting loop (66).

13. The tine assembly (44) as set forth in any one of claims 6 to 12 wherein the crop-engaging tine (32) comprises a first material and the mounting pad (46, 346) comprises a second material different from the first material.

14. The tine assembly (44) as set forth in claim 13, wherein the crop-engaging tine (32) comprises metal and the mounting pad (46, 346) comprises at least one of a polymer and a self-lubricating material.

15. A crop-engaging device (20) arranged for being attached to an agricultural harvester or implement (1), the crop-engaging device (20) comprising a tine support (34, 36) and at least one tine assembly (44) of any one of claims 6 to 14, wherein the or every coil (60, 62) of the crop-engaging tine (32) of the or one tine assembly (44) is attached to the tine support (34, 36) and the mounting pad (46, 346) of this tine assembly (44) establishes a distance between the tine (32) and the tine support (34, 36) during operation.

16. The crop-engaging device (20) as set forth in claim 15 comprising at least one metal fastener (80), the mounting pad (46, 346) of the tine assembly (44) establishing a distance between the crop-engaging tine (32) of this tine assembly (44) and the fastener (80).

17. An agricultural harvester or implement (1) for processing crop material lying on the ground, the harvester or implement (1) comprising the crop-engaging device (20) of claim 15 or claim 16.

## Patentansprüche

1. Montageauflage (46, 346) zur Befestigung einer pflanzenkontaktierenden Zinke (32) an einer Zinkenhalterung (34, 36) einer pflanzenkontaktierenden Vorrichtung (20) einer landwirtschaftlichen Erntemaschine oder eines landwirtschaftlichen Geräts (1), wobei die Montageauflage (46, 346) aufweist:
einen Körperbereich (70, 370) zur Befestigung zwischen der Zinke (32) und der Zinkenhalterung (34, 36), wobei der Körperbereich (70, 370) eine Körperöffnung (75, 375) zur Aufnahme eines gegebenen Befestigungsmittels (80) aufweist, um den Körperbereich (70, 370) an der Zinkenhalterung (34, 36) zu befestigen;
**gekennzeichnet durch** eine Schlaufe (76, 376), die sich von dem Körperbereich (70, 370) zur Montage zwischen einem gegebenen Befestigungsmittel (80) und der Zinke (32) erstreckt, wobei die Schlaufe (76, 376) eine Schlaufenöffnung (82, 382) zur Aufnahme des gegebenen Befestigungsmittels (80) aufweist.

2. Montageauflage (46, 346) nach Anspruch 1, wobei die Körperöffnung (75, 375) und die Schlaufenöffnung (82, 382) in der Lage sind, so ausgerichtet zu werden, dass sie ein gemeinsames Befestigungsmittel (80) zur Befestigung der Montageauflage (46, 346) an der Zinkenhalterung (34, 36) aufzunehmen.

3. Montageauflage (46, 346) nach Anspruch 1 oder 2, wobei die Montageauflage (46, 346) ausgebildet ist, eine pflanzenkontaktierende Zinke (32) mit zwei Spulen (60, 62), die durch eine Verbindungsschleife (66) verbunden sind, und zwei Armen (50, 52), an der Zinkenhalterung (34, 36) zu befestigen, wobei die Montageauflage (46, 346) aufweist:
einen ersten bogenförmigen Ausleger (72) zur Montage zwischen einer ersten Spule (60) und der Zinkenhalterung (34, 36); und
einen zweiten bogenförmigen Ausleger (74) zur Montage zwischen einer zweiten Spule (62) und der Zinkenhalterung (34, 36).

4. Montageauflage (46, 346) nach Anspruch 3, wobei die Schlaufe (76, 376) mit dem Körperbereich (70, 370) so gelenkig verbunden ist, dass die Schlaufe (76, 376) um einen Teil (68) der Verbindungsschleife (66) der Zinke (32) herum eine Schleife bilden kann.

5. Montageauflage (46, 346) nach einem der Ansprüche 1 bis 4, wobei die Montageauflage (46, 346) ein Polymer und/oder ein selbstschmierendes Material aufweist.

6. Zinkenanordnung (44) zum Kontakt mit Pflanzenmaterial, das auf dem Boden liegt; wobei die Zinkenanordnung (44) ausgebildet ist, an einem landwirtschaftlichen Fahrzeug oder einer Implementierung (1) befestigt zu werden, wobei die Zinkenanordnung (44) aufweist:
eine pflanzenkontaktierende Zinke (32), die aufweist:
mindestens eine Spule (60, 62),
mindestens einen Arm (50, 52), der sich von der mindestens einen Spule (60, 62) aus erstreckt; und
eine Verbindungsschleife (66), die sich von der einen oder jeder Spule (60, 62) zur Befestigung der Zinke (32) an einer Zinkenhalterung (34, 36) aus erstreckt; und
die Montageauflage (46, 346) nach Anspruch 1.

7. Zinkenanordnung (44) nach Anspruch 6, wobei die Schlaufe (76, 376) um die Verbindungsschleife (66) der Zinke (32) als Schleife herumgeführt ist, wobei die Körperöffnung (75, 375) und die Schlaufenöffnung (82, 382) der Montageauflage (46, 346) so ausgerichtet sind, dass ein gemeinsames Befestigungsmittel (80) eine Befestigung der Montageauflage (46, 346) an der Zinkenhalterung (34, 36) ermöglicht.

8. Zinkenanordnung (44) nach Anspruch 7, die ferner ein Befestigungsmittel (80) zur Befestigung der Montageauflage (46, 346) an der Zinkenhalterung (34, 36) aufweist, wobei das Befestigungsmittel (80) in der Körperöffnung (75, 375) und in der Schlaufenöffnung (82, 382) aufgenommen wird.

9. Zinkenanordnung (44) nach einem der Ansprüche 6 bis 8, wobei die Zinke (32) eine weitere Spule (62) aufweist, wobei die Verbindungsschleife (66) die Zinke (32) mit der Spule (60) und der weiteren Spule (62) verbindet und wobei die Montageauflage (46, 346) dazu ausgebildet ist, zwischen der Spule (60) und der weiteren Spule (62) auf der einen Seite und der Zinkenhalterung (34, 36) auf der anderen Seite montiert zu werden.

10. Zinkenanordnung (44) nach Anspruch 9, wobei die Montageauflage (46, 346) aufweist:
einen ersten bogenförmigen Ausleger (72) zur Montage zwischen der Spule (60) und der Zinkenhalterung (34, 36); und
einen zweiten bogenförmigen Ausleger (74) zur Montage zwischen der weiteren Spule (62) und der Zinkenhalterung (34, 36).

11. Zinkenanordnung (44) nach Anspruch 10, wobei die Spule (60) und die weitere Spule (62) durch einen Abstand (D1) getrennt sind, und wobei die Schlaufe (76, 376) eine Breite (W1) hat, die gleich oder kleiner ist als der Abstand (D1) zwischen den Spulen (60, 62).

12. Zinkenanordnung (44) nach einem der Ansprüche 6 bis 11, wobei die Schlaufe (76, 376) mit dem Körperbereich (70, 370) der Montageauflage (46, 346) derart gelenkig verbunden ist, dass die Schlaufe (76, 376) um einen Teil (68) der Verbindungsschleife (66) herum als Schleife geführt werden kann.

13. Zinkenanordnung (44) nach einem der Ansprüche 6 bis 12, wobei die pflanzenkontaktierende Zinke (32) ein erstes Material aufweist und die Montageauflage (46, 346) ein zweites Material, das sich von dem ersten Material unterscheidet, aufweist.

14. Zinkenanordnung (44) nach Anspruch 13, wobei die pflanzenkontaktierende Zinke (32) Metall aufweist und die Montageauflage (46, 346) ein Polymer und/oder ein selbstschmierendes Material aufweist.

15. Pflanzenkontaktierende Vorrichtung (20), die dazu ausgebildet ist, an einer landwirtschaftlichen Erntemaschine oder einem landwirtschaftlichen Gerät (1) befestigt zu werden, wobei die pflanzenkontaktierende Vorrichtung (20) eine Zinkenhalterung (34, 36) und mindestens eine Zinkenanordnung (44) nach einem der Ansprüche 6 bis 14 aufweist, wobei die oder jede Spule (60, 62) der pflanzenkontaktierenden Zinke (32) der oder einer Zinkenanordnung (44) an der Zinkenhalterung (34, 36) befestigt ist und die Montageauflage (46, 346) dieser Zinkenanordnung (44) während des Betriebs einen Abstand zwischen der Zinke (32) und der Zinkenhalterung (34, 36) bildet.

16. Pflanzenkontaktierende Vorrichtung (20) nach Anspruch 15 mit mindestens einem Metallbefestigungsmittel (80), wobei die Montageauflage (46, 346) der Zinkenanordnung (44) einen Abstand zwischen der pflanzenkontaktierenden Zinke (32) dieser Zinkenanordnung (44) und dem Befestigungsmittel (80) bildet.

17. Landwirtschaftliche Erntemaschine oder landwirtschaftliches Gerät (1) zur Verarbeitung von Pflanzenmaterial, das auf dem Boden liegt, wobei die Erntemaschine oder Implementierung (1) die pflanzenkontaktierende Vorrichtung (20) nach Anspruch 15 oder 16 aufweist.

## Revendications

1. Semelle de montage (46, 346) pour fixer une dent s'engageant dans une récolte (32) sur un support de dents (34, 36) d'un dispositif s'engageant dans une récolte (20) d'une moissonneuse ou d'un outil (1), la semelle de montage (46, 346) comprenant :
un corps (70, 370) à monter entre la dent (32) et le support de dents (34, 36), le corps (70, 370) comportant une ouverture (75, 375) pour recevoir un dispositif de fixation donné (80) pour fixer le corps (70, 370) au support de dents (34, 36) ; et
**caractérisée en ce qu'**une patte (76, 376) s'étend à partir du corps (70, 370) pour être fixée entre un dispositif de fixation donné (80) et la dent (32), la patte (76, 376) ayant une ouverture (82, 382) pour recevoir le dispositif de fixation donné (80).

2. Semelle de montage (46, 346) selon la revendication 1, dans laquelle l'ouverture du corps (75, 375) et l'ouverture de la patte (82, 382) peuvent être alignées pour recevoir un dispositif de fixation commun (80) pour fixer la semelle de montage (46, 346) au support de dents (34, 36).

3. Semelle de montage (46, 346) selon la revendication 1 ou 2, dans laquelle la semelle de montage (46, 346) est adaptée pour fixer une dent s'engageant dans une récolte (32) ayant deux enroulements (60, 62) raccordée par une boucle de raccordement (66) et deux bras (50, 52) au support de dents (34, 36), la semelle de montage (46, 346) comprenant :
une première jambe courbée (72) à monter entre un premier enroulement (60) et le support de dents (34, 36) ; et
une seconde jambe courbée (74) à monter entre un second enroulement (62) et le support de dents (34, 36) .

4. Semelle de montage (46, 346) selon la revendication 3, dans laquelle la patte (76, 376) est articulée sur le corps (70, 370) pour lui permettre de former une boucle autour d'une partie (68) de la boucle de raccordement (66) de la dent (32).

5. Semelle de montage (46, 346) selon l'une quelconque des revendications 1 à 4, dans laquelle la semelle de montage (46, 346) comprend au moins un d'un matériau polymère et d'un matériau autolubrifiant.

6. Ensemble de dents (44) pour s'engager dans une récolte placée au sol ; l'ensemble de dents (44) étant disposé pour être fixé à un véhicule agricole ou un outil (1), l'ensemble de dents (44) comprenant :
une dent s'engageant dans la récolte (32) comprenant :
au moins un enroulement (60, 62)
au moins un bras (50, 52) qui s'étend à partir de l' ou (d'un) enroulement (60, 62) ; et
une boucle de raccordement (66) s'étendant à partir de l'enroulement ou de chaque enroulement (60, 62) pour fixer la dent (32) à un support de dents (34, 36) ; et
la semelle de montage (46, 346) selon la revendication 1.

7. Ensemble de dents (44) selon la revendication 6, dans lequel la patte (76, 376) est passée en boucle autour de la boucle de raccordement (66) de la dent (32), l'ouverture du corps (75, 375) et l'ouverture de la patte (82, 382) de la semelle de montage (46, 346) étant alignées pour permettre à un dispositif de fixation commun (80) de fixer la semelle de montage (46, 346) au support de dents (34, 36).

8. Ensemble de dents (44) selon la revendication 7, comprenant, en outre, un dispositif de fixation (80) pour fixer la semelle de montage (46, 346) au support de dents (34, 36), le dispositif de fixation (80) étant reçu dans l'ouverture du corps (75, 375) et dans l'ouverture de la patte (82, 382).

9. Ensemble de dents (44) selon l'une quelconque des revendications 6 à 8, dans lequel la dent (32) comprend un autre enroulement (62), la boucle de raccordement (66) de la dent (32) réunissant l'enroulement (60) et l'autre enroulement (62), la semelle de montage (46, 346) étant adaptée pour être montée entre l'enroulement (60) et l'autre enroulement (62), d'un côté, et le support de dents (34, 36), de l'autre côté.

10. Ensemble de dents (44) selon la revendication 9, dans lequel la semelle de montage (46, 346) comprend :
une première jambe courbée (72) à monter entre l'enroulement (60) et le support de dents (34, 36) ; et
une seconde jambe courbée (74) à monter entre l'autre enroulement (62) et le support de dents (34, 36) .

11. Ensemble de dents (44) selon la revendication 10, dans lequel l'enroulement (60) et l'autre enroulement (62) sont séparés d'une distance (D1), la patte (76, 376) ayant une largeur (W1) égale ou inférieure à la distance (D1) entre les enroulements (60, 62).

12. Ensemble de dents (44) selon l'une quelconque des revendications 6 à 11, dans lequel la patte (76, 376) est articulée sur le corps (70, 370) de la semelle de montage (46, 346) pour lui permettre de former une boucle autour d'une partie (68) de la boucle de raccordement (66).

13. Ensemble de dents (44) selon l'une quelconque des revendications 6 à 12, dans lequel la dent s'engageant dans une récolte (32) comprend un premier matériau, et dans lequel la semelle de montage (46, 346) comprend un second matériau différent du premier matériau.

14. Ensemble de dents (44) selon la revendication 13, dans lequel la dent s'engageant dans une récolte (32) comprend un métal, et dans lequel la semelle de montage (46, 346) comprend au moins un d'un matériau polymère et d'un matériau autolubrifiant.

15. Dispositif s'engageant dans une récolte (20) disposé pour être fixé à une moissonneuse ou un outil (1), le dispositif s'engageant dans une récolte (20) comprenant un support de dents (34, 36) et au moins un ensemble de dents (44), selon l'une quelconque des revendications 6 à 14, dans lequel l'enroulement ou chaque enroulement (60, 62) de la dent s'engageant dans une récolte (32) de l'(ou d'un) ensemble de dents (44) est fixé au support de dents (34, 36), et la semelle de montage (46, 346) de cet ensemble de dents (44) établit une distance entre la dent (32) et le support de dents (34, 36) en fonctionnement.

16. Dispositif s'engageant dans une récolte (20) selon la revendication 15, comprenant au moins un dispositif de fixation métallique (80), la semelle de montage (46, 346) de l'ensemble de dents (44) établissant une distance entre la dent s'engaqeant dans une récolte (32) de cet ensemble de dents (44) et le dispositif de fixation (80).

17. Moissonneuse ou outil (1) pour traiter une récolte se trouvant su sol, la moissonneuse ou l'outil (1) comprenant le dispositif s'engageant dans la récolte (20) de la revendication 15 ou 16.
